# EUROPEAN PATENT SPECIFICATION

(11) **EP 0 436 228 B1**
(45) Date of publication and mention of the grant of the patent: **16.10.1996**
(21) Application number: 90125700.6
(22) Date of filing: 28.12.1990
(51) Int. Cl.: G11B 7/00, G11B 7/24

(54) **Recording and reproducing methods**
Aufzeichnungs- und Wiedergabeverfahren
Méthodes d'enregistrement et de reproduction

(30) Priority: 28.12.1989 JP 340801/89; 26.01.1990 JP 16773/90; 02.08.1990 JP 206163/90; 03.08.1990 JP 207453/90; 27.08.1990 JP 226351/90; 02.10.1990 JP 265426/90; 26.10.1990 JP 289234/90
(43) Date of publication of application: 10.07.1991
(73) Proprietor: SANYO ELECTRIC CO., LTD., Moriguchi-shi, Osaka (JP)
(72) Inventor: Tsujioka, Tsuyoshi, Osaka-shi, Osaka-fu (JP); Matsuura, Kotaro, Tsuzuki-gun, Kyoto-fu (JP)
(74) Representative: Glawe, Delfs, Moll & Partner

(56) References cited:
- EP-A- 0 193 931
- EP-A- 0 335 579
- JP-A-61 203 450
- US-A- 5 011 756
- PATENT ABSTRACTS OF JAPAN vol. 13, no. 424 (P-934)21 September 1989 & JP-A-1 155 343
- PATENT ABSTRACTS OF JAPAN vol. 13, no. 64 (P-827)14 February 1989 & JP-A-63 251 937
- PATENT ABSTRACTS OF JAPAN vol. 12, no. 97 (P-682)30 March 1988 & JP-A-62 231 437
- PATENT ABSTRACTS OF JAPAN vol. 6, no. 192 (P-145)30 September 1982 & JP-A-57 103 132
- PROCEEDINGS OF SPIE vol. 420, 1983, WASHINGTON pages 186 - 193; L.M. RALSTON: 'An evalution of photochromic and photodichroic materials for write, read, erase applications'
- PATENT ABSTRACTS OF JAPAN vol. 13, no. 75 (P-831)21 February 1989 & JP-A-63 259 850

## Description

### BACKGROUND OF THE INVENTION

### Field of the Invention

The present invention relates to recording and reproducing methods and apparatus for an optical recording medium which comprises at least one recording layer containing a photochromic material.

### Description of the Background Art

In recent years, deep study has been made to apply a photochromic material to a recording layer of a recording medium. When a light beam of a prescribed wavelength is applied to such a photochromic material, its molecular structure is changed by photochemical reaction, to change optical properties with respect to a light beam having a specific wavelength.

When a light beam of another prescribed wavelength is applied to the photochromic material, the changed molecular structure returns to its original state.

Such change of molecular structure leads to great change of a light absorption property with respect to the light beam of the prescribed wavelength. Thus, such a photochromic material can be applied to a recording layer for an optical recording medium. Namely, information can be recorded with a recording beam having the aforementioned former wavelength. Then, the information can be reproduced with a reproducing beam having the latter wavelength.

When such a reproducing method is employed, however, an already recorded portion of the recording layer absorbs the reproducing beam, and its molecular structure is disadvantageously changed to an unrecorded state.

In order to perform multiplex recording of data in such an optical recording medium, it is necessary to stack a plurality of recording layers which contain a plurality of photochromic materials having different absorption property respectively. Further, the recording layers must be irradiated with a plurality of laser beams for recording, which have wavelengths corresponding to the respective photochromic materials contained in the recording layers. Japanese Patent Laying-Open No. 61-203450 (1986) discloses a method for multiplex recording. In such a conventional multiplex-wavelength recording method, a recording medium is provided with a plurality of recording layers, which contain photochromic materials having different light absorption wavelength regions. When a light beam of a specific wavelength is applied to this medium, a photochromic material which is contained in one of the recording layers and adapted to absorb the light beam of the specific wavelength causes photochemical reaction, so that information is recorded in this recording layer. Thus, the recording layers are irradiated with light beams of corresponding wavelengths respectively, so that data are multiplex-recorded in the recording layers.

The data thus recorded in the recording layers are read through application of light beams being at intensity levels, for example about 1/10 those in recording.

In such a conventional multiplex-wavelength recording method, however, a light beam of a certain wavelength may undesirably cause photochemical reaction in a non-correspondent photochromic material, since the photochromic materials spectrally overlap with each other. Consequently, crosstalk is caused when information is recorded/reproduced in the conventional multiplex-wavelength recording method.

In addition to the case of multiplex recording, such crosstalk is also caused from a recording track which is adjacent to a main recording track for reproducing information. When a light beam for reading the information from the main recording track also hits the adjacent recording track, information recorded in the adjacent track is disadvantageously superposed on the light beam.

JP-A-1 155 343 discloses a method for recording and reproducing information from an optical recording medium having a recording layer containing photochromic material by applying a polarized light beam onto said recording layer for causing change of optical properties. Therefore, two light beams having the same wavelengths are applied to the recording medium. These light beams are polarized perpendicularly to each other. Light which is not polarized is used for reading.

PROC. OF SPI, vol. 420, June 6-10, 1983, pages 1986-1993 discloses the possibility of recording information by exposing a recording medium to linearly polarized light. Randomly aligned recording material which causes birefringence in response to the radiation of the linearly polarized light is included in the recording medium. Reading is carried out with two polarizers oriented at ± 45° to the recorded polarization.

JP-A-62 231 437 discloses multiplex recording by using light beams having the same wavelenghts but polarized perpendicularly to each other. The light beams of the above same wavelengths are used for reading. The light absorptive layers exhibit light absorption only to the linearly polarized light of the specific polarization direction, and the absorption polarization directions of the layers differ from each other.

JP 6325 1937 discloses reducing cross-talks from adjacent track by changing the rate of birefringence Adjacent tracks are formed in advance so that the rate of birefringence can be made different from each other the birefringent properties are given and the rate of birefringence is changable.

EP-A-193 931 discloses a recording and reproducing method according to the precharacterizing part of claim 1. Photochromic materials of different absorption wavelengths are used, and the multiplex recording is achieved by using light beams of different wavelengths.

### Summary of the invention

An object of the present invention is to prevent crosstalk in a multiplex-recording/reproducing method.

This object is achieved by a recording method according to claim 1 and a reproducing method according to claim 2. The dependent claims are related to further advantageous aspects of the present invention.

An advantage of the present invention is, in relation to an optical recording medium employing a photochromic material, to prevent the molecular structure of an already recorded portion from being changed to an unrecorded state upon absorption of a reproducing beam.

Another advantage of the present invention is to provide a multiplex recording method employing photochromic materials of the same types and laser beams of the same wavelengths.

A further advantage of the present invention is to prevent crosstalk from an adjacent recording track.

A further advantage of the present invention is to provide an apparatus which can accurately record and/or reproduce information at a high speed in an optical recording medium employing a photochromic material.

According to the present invention, the anisotropic change of optical properties, which is caused in the recording layer by irradiation with the polarized light beam, may be the introduction of a birefringent property. The birefringent property is introduced into the recording layer by application of the polarized light beam, thereby recording information. The information is reproduced by detecting the birefringent property of the recording layer.

Molecules of a photochromic material which is contained in a recording layer are dispersed in isotropic states when the recording layer is in an unrecorded state. When such a recording layer is irradiated with a linearly polarized light beam, photochemical reaction is mainly caused by those of the molecules whose molecular directions are at a specific angle with respect to the plane of polarization of the light beam, to cause change in molecular structure. When such molecules of specific directions thus mainly differ in molecular structure from the remaining molecules, the recording layer has a birefringent property with neutral axes respective to the directions of the molecules.

"1989 Shunki Nihon Kagaku-Kai Koen Yoko-Shu", p. 429, reports that such birefringence is also caused with respect to light in a wavelength region of small or no light absorption. A linearly polarized light beam is applied to a recording layer to introduce a birefringent property into the recording layer by the aforementioned principle, so that information is recorded in a portion into which the birefringent property is introduced.

In a reproducing method according to the present invention, data are read from the recording layer by detecting change of the polarized state of the light beam, which is caused upon passage through the recording layer.

A polarized light beam for reproducing information has a wavelength in a region of small or no absorption by a photochromic material which is contained in a recording layer. Thus, the reproducing beam is hardly absorbed in the recording layer. Therefore, it is possible to prevent the molecular structure of the recording layer from being changed to an unrecorded state.

In order to perform multiplex recording, several types of polarized light beams having different polarized states are applied so that molecules of different directions cause photochemical reaction. Particularly in the case of linear polarization, photochemical reaction is easily caused when the plane of polarization is at a specific angle with respect to the directions of the molecules. Such photochemical reaction is hardly caused when the plane of polarization is perpendicular to the specific angle. Namely, the maximum photochemical reaction is caused upon irradiation with a linearly polarized light beam which has a plane of polarization coinciding with transition moment having a specific direction with respect to the directions of the molecules.

In the present invention, the planes of polarization of the polarized light beams having different polarized states are preferably perpendicular to each other. However, multiplex recording can be performed even if the planes of polarization are not perpendicular to each other.

According to the present invention, an optical recording medium contains a plurality of photochromic materials having different light absorption wavelength regions, and polarized light beams having wavelengths corresponding to the respective photochromic materials are applied to the optical recording medium in different polarized states, to cause optically anisotropic properties in the photochromic materials, thereby multiplex-recording information.

According to the present invention, it is possible to prevent crosstalk in multiplex recording through a plurality of photochromic materials having different light absorption wavelength regions.

When molecules of a photochromic material contained in a recording layer are dispersed in isotropic states, molecules of specific directions corresponding to a polarized state of a light beam mainly cause photochemical reaction to be changed in molecular structure, as hereinabove described. Thus, optically anisotropic properties are caused. In one of such optically anisotropic properties, absorbance has angle dependency. When a linearly polarized light beam is applied to a recording layer in which information is recorded, for example, there is developed difference in absorbance which depends on an angle formed by directions of polarization of two linearly polarized light beams employed for recording and reproduction, i.e., dichroism. Therefore, information can be reproduced by applying a light beam whose polarized state corresponds to that of a recording beam and detecting change in absorbance.

In the present invention, multiplex recording is performed through such a principle. According to the present invention, a recording layer in which information is recorded has direction dependency and wavelength dependency of absorbance. In order to reproduce the information, a light beam whose wavelength and polarized state correspond to those of a recording beam is applied to detect difference in absorbance thus caused. In the present invention, it is possible to reduce crosstalk since absorbance has direction dependency in addition to wavelength dependency. Therefore, it is possible to sufficiently suppress crosstalk which is based on light beams of different wavelengths in a multiplex-wavelength recording method for an optical recording medium.

According to a further aspect of the present invention, a recording layer of an optical recording medium has a plurality of recording tracks, and polarized light beams of different polarized states are applied to adjacent recording tracks to cause different optically anisotropic properties in the adjacent recording tracks, thereby recording information. According to this aspect, further, polarized light beams whose polarized states correspond to directions of the different optically anisotropic properties are applied to the recording tracks, to reproduce the information.

When a polarized light beam is applied to a recording layer in which molecules of a photochromic material are dispersed in isotropic states, photochemical reaction is caused mainly by specific molecules which correspond to the polarization state of the light beam, to cause change in molecular structure. Optically anisotropic properties are caused by such change in molecular structure.

One of optically anisotropic properties is a birefringent property. When a polarized light beam is applied to a recording layer causing such a birefringent property, the polarized state of transmitted or reflected light thereof is changed depending on a neutral axis of birefringence. Thus, it is possible to reproduce information by applying a polarized light beam to a recording layer, detecting change of its polarized state and detecting presence/absence of a birefringent property.

Another one of the optically anisotropic properties is angle dependency of absorbance. When a linearly polarized light beam is applied to a recording layer, for example, there is developed difference in absorbance which depends on an angle formed by planes of polarization of two linearly polarized light beams employed for recording and reproduction, i.e., dichroism. Therefore, it is possible to reproduce information by applying a polarized light beam whose polarized state corresponds to that of a recording beam and detecting change in absorbance.

When a birefringent property is introduced as an optically anisotropic property, neutral axis directions are preferably made different between every adjacent pair of recording tracks.

More preferably, the directions of the neutral axes are perpendicular to each other.

According to this aspect, linearly or elliptically polarized light beams having different polarized states are applied to adjacent recording tracks, to cause different optically anisotropic properties, thereby recording information. In order to reproduce the information, polarized light beams, whose polarized states correspond to optically anisotropic directions of the respective recording tracks, are applied. When a birefringent property is introduced as an optically anisotropic property, difference between optical properties of adjacent recording tracks can be separately detected.

When difference in absorbance is introduced as an optically anisotropic property, substantially no difference in optical anisotropy is detected between adjacent recording tracks, whereby it is possible to suppress crosstalk caused between adjacent recording tracks.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 illustrates an exemplary photochromic material which is contained in a recording layer in accordance with the present invention;
Fig. 2 illustrates light absorption characteristics of the material shown in Fig. 1;
Fig. 3 typically illustrates an exemplary recording/reproducing apparatus for carrying out a method according to the state of the art;
Fig. 4 typically illustrates another exemplary recording/reproducing apparatus for carrying out the method according to the state of the art;
Fig. 5 illustrates relation between angles θ of directions of polarization and absorbance values;
Fig. 6A illustrates absorbance values for explaining of the principle for the recording and reproducing method in a case of recording information with a randomly or circularly polarized light beam of a wavelength λₓ and reproducing the information with a randomly or circularly polarized light beam;
Fig. 6B illustrates absorbance values for explaining of the principle for the recording and reproducing method in a case of recording information with the linearly polarized light beam of the wavelength λₓ and reproducing the information with a linearly polarized light beam of θ = 0°;
Fig. 6C illustrates absorbance values for explaining of the principle for the recording and reproducing method in a case of recording information with the linearly polarized light beam of the wavelength λₓ and reproducing the information with a linearly polarized light beam of θ = 90°;
Fig. 7A illustrates one of photochromic materials employed in accordance with the present invention;
Fig. 7B illustrates another one of the photochromic materials employed in accordance with the present invention;
Fig. 8 illustrates results of absorbance values measured with a randomly polarized light beam after irradiating a circular polarized light beam (λ= 470nm) in accordance with a conventional method;
Fig. 9A illustrates results of absorbance values measured with a linearly polarized light beam of θ = 0° in accordance with the third aspect of the present invention;
Fig. 9B illustrates results of absorbance values measured with a linearly polarized light beam of θ = 90° in accordance with the third aspect of the present invention;
Fig. 10A illustrates absorbance of a material a;
Fig. 10B illustrates absorbance of a material b;
Fig. 10C illustrates absorbance of a material c;
Fig. 10D illustrates absorbance of a medium containing the materials a, b and c in a mixed state;
Fig. 11 typically illustrates directions of linear polarization of respective recording tracks in accordance with the third aspect of the present invention;
Fig. 12 typically illustrates an exemplary recording/reproducing apparatus according to the present invention;
Fig. 13 illustrates an exemplary recording/reproducing apparatus;
Fig. 14 illustrates planes of polarization of incident light and transmitted light in relation to a direction of neutral axis of a half-wave plate having an angle of 0°;
Fig. 15 illustrates planes of polarization of incident light and transmitted light in relation to a direction of neutral axis of a half-wave plate having an angle of 45°;
Fig. 16 typically illustrates recording tracks;
Fig. 17 typically illustrates optically anisotropic directions in each recording track of an optical recording medium having spiral recording tracks;

### DESCRIPTION OF THE PREFERRED EMBODIMENT

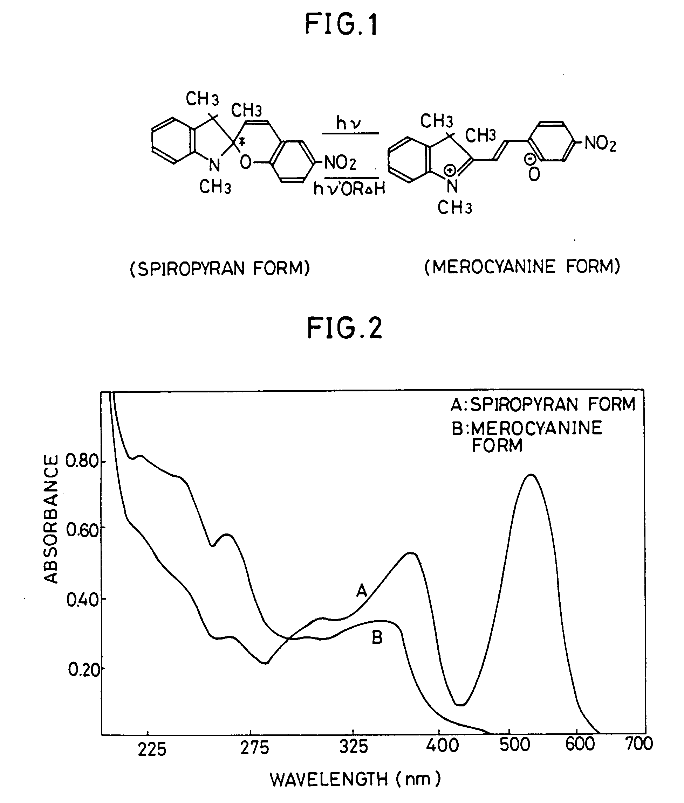

Fig. 1 shows structures of a spiropyran compound as photochromic material, which can be employed as an exemplary photochromic material contained in a recording layer in the present invention. The molecular structure of such a material is converted from a spiropyran form to a merocyanine form upon irradiation with ultraviolet light, and vice versa upon irradiation with visible light, or heating. Fig. 2 shows wavelength-to-absorbance characteristics of the material in the respective molecular structures. A recording medium is produced by adding a binder of PVB (polyvinyl butyral) to MEK (methyl ethyl ketone) for preparing a solvent, dissolving the aforementioned photochromic material in the solvent and applying this solution onto a substrate of quartz glass by spin coating, thereby forming a recording layer of 1 µm in thickness.

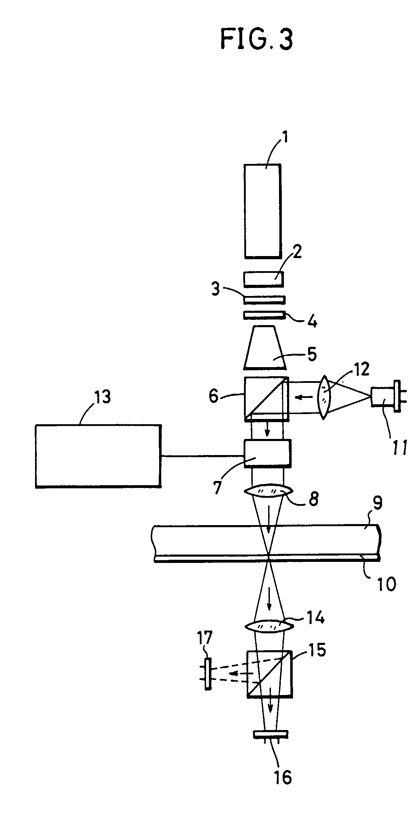

Fig. 3 shows an optical system of a recording/reproducing apparatus for carrying out a method for recording /reproducing according to the state of the art. An ultraviolet light beam emitted from an Ar laser 1 is converted to a pulse beam by a modulator 2. Thereafter components of the beam excluding those of 360 nm in wavelength are eliminated through a filter 3, and the remaining components are expanded to a linearly polarized light beam through a polarizer 4. This beam is converted to an uniform beam by a beam expander 5, and thereafter introduced into an objective lens 8 through a dichroic mirror 6 and a Faraday rotator 7, to be converged on a recording layer 10 of a medium 9. While the Ar laser 1 is driven as described above, the medium 9 is relatively moved in a prescribed direction to modulate the beam through the modulator 2 in response to data. Thus, code tracks are formed on the recording layer 10 as a train of birefringent portions (recorded portions).

On the other hand, a semiconductor laser 11 emits a linearly polarized light beam of 780 nm in wavelength. This beam is converted to a collimated beam through a collimator lens 12, and then converged on the recording layer 10 of the medium 9 through the Faraday rotator 7 and the objective lens 8. A control circuit 13 drives/controls the Faraday rotator 7 to introduce the beam into the recording layer 10 so that its plane of polarization is at an angle of 45° with respect to that of the aforementioned beam which is emitted from the Ar laser 1. Neutral axes of birefringence of the recorded portions, which are formed on the recording layer 10 by the Ar laser 1, are formed in inclination by prescribed angles with respect to the plane of polarization of the Ar laser 1. Thus, the linearly polarized light beam, which is emitted from the semiconductor laser 11, is applied to the recorded portions of the recording layer 10 so that its plane of polarization is at an angle of 45° with respect to the neutral axes.

When a linearly polarized light beam is so introduced into a birefringent material that its plane of polarization is inclined with respect to a neutral axis, the beam is converted to an elliptically polarized light or circularly polarized light beam upon transmission through the material. Namely, such a birefringent material is adapted to change the phases of beam components which are parallel to the neutral axis, such as a fast axis, for example, with respect to those of components which are perpendicular to the neutral axis. The principle of the aforementioned conversion of the linearly polarized light beam to the elliptically polarized light beam is based on such a property.

The linearly polarized light beam emitted from the semiconductor laser 11 is applied onto the recorded portions of the recording layer 10 so that its plane of polarization is at the angle of 45° with respect to the neutral axes, whereby the polarized state of the light beam is converted from linear polarization to elliptic polarization or circular polarization upon transmission through the recording layer 10. When the plane of polarization of the linearly polarized light beam is thus set at the angle of 45° with respect to the neutral axes, the aforementioned parallel components of the linearly polarized light beam with respect to the neutral axes are equal to the perpendicular components, whereby it is possible to maximize the aforementioned change of the polarized state.

The beam thus transmitted through the recording layer 10 is introduced into a polarizing beam splitter 15 through the lens 14, so that transmitted and reflected beams are received by sensors 16 and 17 respectively. The polarizing beam splitter 15 is so arranged as to fully transmit the linearly polarized light beam from the semiconductor laser 11 when no medium 9 is provided. Thus, when the beam is applied to unrecorded portions (non-birefringent portions) of the recording layer 10 in the state shown in Fig. 3, no change is caused in the polarized state of the light beam upon transmission through the medium 9. Therefore, the light beam is fully transmitted through the polarizing beam splitter 15 to cause an output only at the sensor 16. When the light beam from the semiconductor laser 11 is applied to the recorded portions of the recording layer 10, on the other hand, the beam is converted to an elliptically polarized light beam upon transmission through the medium 9, as hereinabove described. Therefore, the beam is partially reflected by the polarizing beam splitter 15, to cause outputs at both of the sensors 16 and 17 in this case.

Thus, when the medium 9 is relatively moved and the objective lens 8 is displaced to scan the aforementioned tracks of the recording layer 10 with the light beam which is emitted from the semiconductor laser 11, the sensors 16 and 17 generate outputs in response to the data recorded on the tracks, whereby the data can be changed to electrical signals by comparing the outputs of the sensors 16 and 17.

The optical system and the medium described above were employed to experimentally record and reproduce data, whereby it was possible to confirm changes in response to recorded and unrecorded states in the outputs from the sensors 16 and 17. In this experiment, the Ar laser 1 and the semiconductor laser 11 were set at 6 mW and 0.5 mW in laser power respectively. The beam emitted from the Ar laser 1 was pulsingly applied to the medium 9 by 10 µsec. to form a spot-type recorded portion on the recording layer 10, while the beam emitted from the semiconductor laser 11 was applied to this recorded portion and the remaining unrecorded portion, to compare outputs of the sensors 16 and 17 with each other.

As hereinabove described, it is possible to record/reproduce data in/from the medium 9 by controlling the Faraday rotator 7 and a beam scanning mechanism (not shown) while selectively driving the Ar laser 1 and the semiconductor laser 11 in response to recording and reproduction. The beam emitted from the semiconductor laser 11 employed for reproduction has the wavelength of 780 nm, which is not in the least absorbed by the photochromic material contained in the recording layer 10, as understood from the characteristic diagram shown in Fig. 2. Thus, the reproducing beam will not act on the photochromic material to change its molecular structure, and hence no undesirable change is caused in the recording layer 10 in reproduction of data with the reproducing beam.

Various modifications are also available. For example, while the Faraday rotator 7 and the control circuit 13 are adapted to incline the plane of polarization of the beam emitted from the semiconductor laser 11 with respect to the neutral axes of the recorded portions on the recording layer 10 in the aforementioned embodiment, arrangement of the semiconductor laser 11 may be adjusted by rotating the same about its optical axis of emission in place of arranging the Faraday rotator 7 and the control circuit 13, so as to incline the plane of polarization of the laser beam with respect to the neutral axes on the recording layer 10.

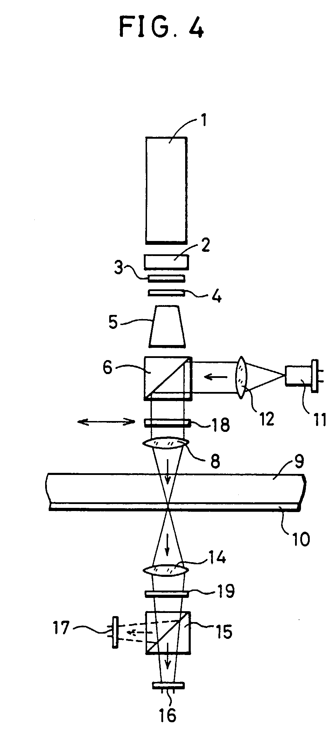

Although the linearly polarized light beam is employed as a reproducing beam in the aforementioned embodiment, a circularly polarized light beam may alternatively be employed for reproduction. Fig. 4 shows an optical system for such a modification. This modification is different from the apparatus shown in Fig. 3 in a point that two quarter-wave plates 18 and 19 are arranged in place of the Faraday rotator 7 and the control circuit 13. In a recording operation, the quarter-wave plate 18 is shifted toward the exterior of an optical path of a beam.

In this case, a linearly polarized light beam, which is emitted from a semiconductor laser 11, is converted to a circularly polarized light beam through the quarter-wave plate 18, and thereafter introduced into a recording layer 10 of a medium 9. If the beam is introduced in an unrecorded portion of the recording layer 10, no change is caused in the polarized state of the beam upon transmission through the recording layer 10. Thus, the beam is transmitted through the medium 9 in the circularly polarized state, and introduced into the quarter-wave plate 19 and again converted to a linearly polarized light beam. A polarized beam splitter 15 is previously position-controlled to fully transmit the beam thus converted to the linearly polarized state. When the beam is thus introduced into an unrecorded portion of the recording layer 10, therefore, the beam transmitted through the medium 9 is introduced only into a sensor 16, to develop an output only at the sensor 16.

When the beam is introduced into a recorded portion of the recording layer 10, on the other hand, its polarized state is converted from circular polarization to elliptic polarization upon transmission through the recorded portion having a birefringent property. Therefore, the beam is not converted to a linearly polarized state upon passage through the quarter-wave plate 19. Thus, the beam which is transmitted through the recorded portion of the recording layer 10 is partially reflected by the polarizing beam splitter 15, to develop an output also at another sensor 17.

Thus, it is possible to read data from the recording layer 10 also when a circularly polarized light beam is employed as a reproducing beam.

Also when an elliptically polarized light beam is employed as a reproducing beam, further, its polarized state is changed upon transmission through a recorded portion. Thus, it is possible to read data from the recording layer 10 by providing appropriate means for detecting such change of the polarized state.

Although the medium is formed by a transmission type one in the aforementioned embodiment, a reflection type medium can alternatively be employed in order to achieve recording/reproducing operation similarly to the above, by slightly modifying the optical system in a proper manner.

Further, the photochromic material, the wavelengths of the laser beams and the like can also be modified in various ways, as a matter of course.

According to the present invention following principle is utilised:

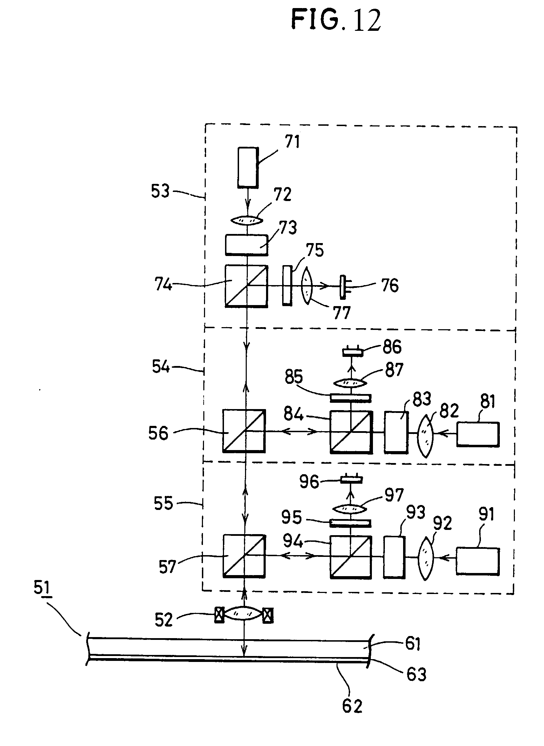

In a recording layer made of a non-oriented photochromic material, difference in absorbance is caused between a recorded state irradiated with a linearly polarized light beam for recording and a non-irradiated unrecorded state. With respect to the recording layer irradiated with the linearly polarized light beam for recording, further, absorbance of a linearly polarized light beam for reproduction having an angle of θ to the direction of polarization of the recording beam is varied with the said angle θ. Namely, a high output is obtained with a linearly polarized light beam of a specific direction (optically anisotropic direction) (θ = 0° in the case of Fig. 11), while the output is reduced when data are reproduced with a linearly polarized light beam of a direction different from an unrecorded track and the said specific direction by 90°. However, the relation between angles θ of directions of polarization and absorbance values may be varied with the photochromic material and the wavelength of the recording or reproducing beam. The optically anisotropic direction is generally defined as a direction causing significant difference in absorbance between the recording and reproducing beams as employed.

According to the present invention, information is recorded by irradiating a recording medium, which contains a plurality of types of photochromic materials, with a linearly polarized light beam having a wavelength in a light absorption wavelength region of the photochromic materials and being linearly polarized in a specific direction. The information is reproduced by irradiating the recording medium with a linearly polarized feeble light beam of a direction (θ = 0°, in general) responsive to that of linear polarization of the recording beam and detecting change in absorbance.

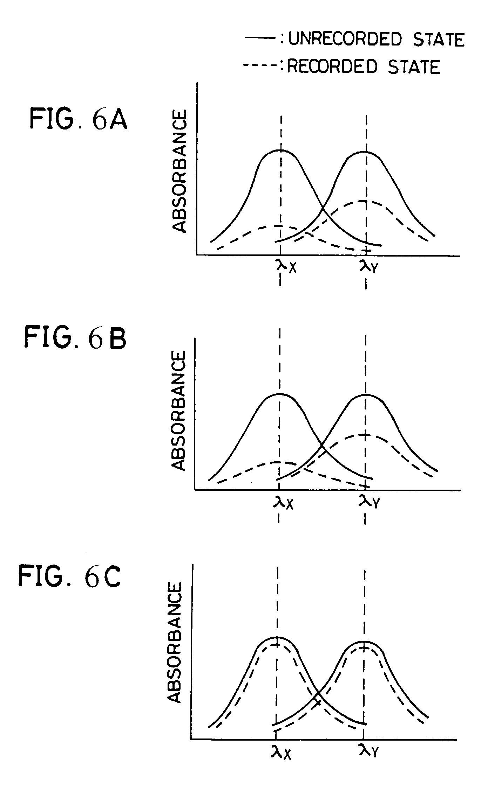

The present invention is now described with reference to conceptual diagrams shown in Figs. 6A to 6C. When a recording layer contains a photochromic material X which has light absorption at a wavelength λ_{X} (absorption maximum wavelength, in general) and another photochromic material Y which has light absorption at a wavelength λ_{Y} (absorption maximum wavelength, in general), for example, absorbance curves of a randomly or linearly polarized feeble light beams in an unrecorded state are as shown by solid lines in Figs. 6A to 6C.

When a randomly or circularly polarized light beam of the wavelength λ_{X} is applied to the recording layer and absorbance is thereafter measured with a randomly or circularly polarized feeble light beam of the same polarized state as the above, absorbance curves shown by broken lines in Fig. 6A are obtained. As understood from these results, not only absorbance at the wavelength λ_{X} but also that at the wavelength λ_{y} are significantly changed when the recording layer is irradiated with the beam of the wavelength λ_{X}. This means that information recorded at the wavelength λ_{X} is also recorded at the wavelength λ_{Y}, to cause crosstalk. Such crosstalk is caused since absorption spectra of the photochromic materials are not steep and absorption wavelength regions overlap with each other.

On the other hand, absorbance curves shown by broken lines in Fig. 6B are obtained when the linearly polarized light beam of the wavelength λ_{X} is applied to the recording layer and then absorbance is measured with a beam which is linearly polarized in a direction of θ = 0°, while those shown by broken lines in Fig. 6C are obtained when absorbance is measured with a beam which is linearly polarized in a direction of θ = 90°. Namely, in a method according to the present invention, absorbance at the wavelength λ_{Y} is similar to that of the conventional one with the linearly polarized light beam of θ = 0°, while absorbance at the wavelength λ_{Y} is hardly changed with the linearly polarized light beam of θ = 90°. Also upon irradiation with the linearly polarized light beam of the wavelength λ_{Y}, absorbance at the wavelength λ_{Y} is similar to that of the conventional one with the linearly polarized light beam of θ = 0°, while absorbance at the wavelength λ_{Y} is hardly changed with the linearly polarized light beam of θ = 90°. Even if linearly polarized light beams having the wavelengths λ_{X} and λ_{Y}, of which polarized directions are perpendicular to each other, are applied, it is possible to detect difference in absorbance substantially with no influence by irradiation with such beams. Thus, crosstalk can be reduced by recording/reproducing information with the two types of linearly polarized light beams having the wavelengths λₓ and λ_{Y}, of which polarized directions are perpendicular to each other.

A first embodiment according to the present invention is now described in detail with reference to the drawings.

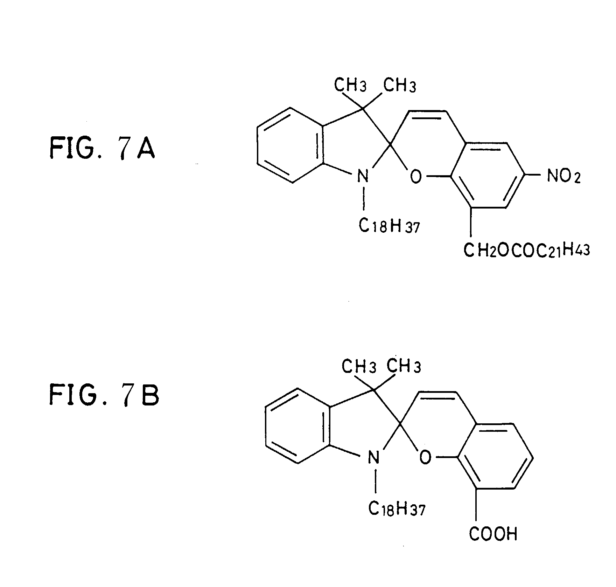

The recording layer can contain fulgide, diallyl ethene and/or spiropyran compound as photochromic materials. Figs. 7A and 7B illustrate two types of exemplary spiropyran photochromic materials A and B. The molecular structures of the photochromic materials A and B are converted from spiropyran forms to photomerocyanine forms upon irradiation with ultraviolet light, and vice versa upon irradiation with visible light. The photochromic material A is irradiated with light around an absorption maximum wavelength of 620 nm and the material B is irradiated with light around an absorption maximum wavelength of 470 nm, so that the molecular structures thereof return from the photomerocyanine forms to the spiropyran forms. When the photochromic materials A and B are in the photomerocyanine forms, absorbance levels at the respective absorption maximum wavelengths are reduced.

The two types of photochromic materials A and B were mixed with each other and applied onto quartz substrates by spin cpating, to produce recording mediums which were provided with recording layers. These recording mediums contained the photochromic materials in isotropic states, with no molecular orientation. Data were experimentally recorded/reproduced in/from the recording mediums by a conventional method and the inventive method respectively.

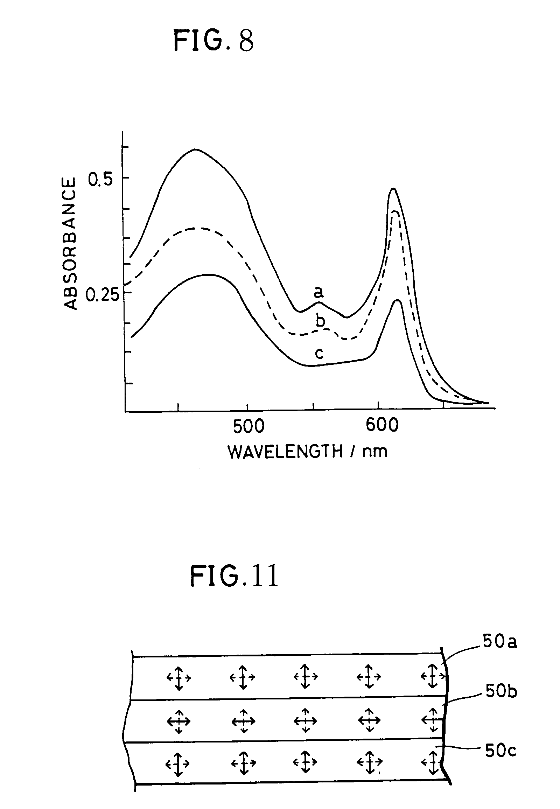

As to the conventional method, randomly polarized ultraviolet light was applied to the recording medium to bring the overall surface of its recording layer into a colored state, i.e., an unrecorded state (photomerocyanine state), and thereafter absorbance was measured g with randomly polarized light. A curve a in Fig. 8 shows the result, i.e., absorbance in the unrecorded state. Then, a circularly polarized light beam of 470 nm in wavelength was applied to the colored (unrecorded) recording medium for recording data, and thereafter absorbance was measured with a randomly polarized light beam. A curve b in Fig. 8 also shows the result. Thereafter a circularly polarized light beam having a wavelength of 620 nm was applied to the recording medium for recording data, and then absorbance was measured with a randomly polarized light beam. A curve c in Fig. 8 shows the result. It is understood from Fig. 8 that application of a light beam having a certain wavelength exerts significant influence on absorbance at another wavelength. This means that crosstalk is remarkably caused in recording/reproduction of information.

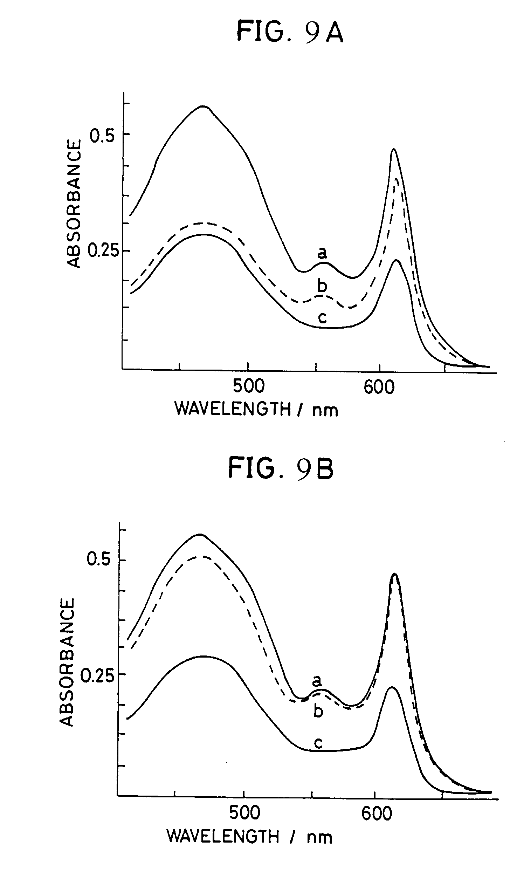

The embodiment is now described. Figs. 9A and 9B show absorbance characteristics measured with light beams which are linearly polarized in directions θ = 0° and θ = 90° with respect to directions of linear polarization for recording in relation to curves b, respectively.

Referring to Figs. 9A and 9B, curves a illustrate absorbance values of recording mediums which are colored by irradiation with randomly polarized ultraviolet light (unrecorded states), and curves b illustrate absorbance values measured after applying linearly polarized light beams of a wavelength 470 nm to colored (unrecorded) mediums for recording data, while curves c illustrate absorbance values measured after simultaneously applying two linearly polarized light beams of 470 nm and 620 nm in wavelength, which are identically polarized in directions perpendicular to each other, to colored recording mediums for recording data. It is understood from these results that, when states of linear polarization related to wavelengths 470 nm and 620 nm are perpendicularly crossed, application of a linearly polarized light beam having a certain wavelength hardly exerts influence on absorbance measured with a linearly polarized light beam having another wavelength, which is perpendicular to the aforementioned linear polarization. Even if a linearly polarized light beam of 620 nm in wavelength is applied to a recording medium (unrecorded state) colored by irradiation with randomly polarized ultraviolet light, influence is hardly exerted on absorbance at the wavelength 470 nm measured with a beam which is linearly polarized in the direction of θ = 90°, although this case is not shown in the figures. Thus, it is possible to record/reproduce information substantially with no crosstalk, by irradiating the recording layer with two linearly polarized light beams of different wavelengths, of which polarized directions are perpendicular to each other, for recording the information, and reproducing the information with linearly polarized light beams having the same wavelengths and reactions of polarization as those of the recording beams.

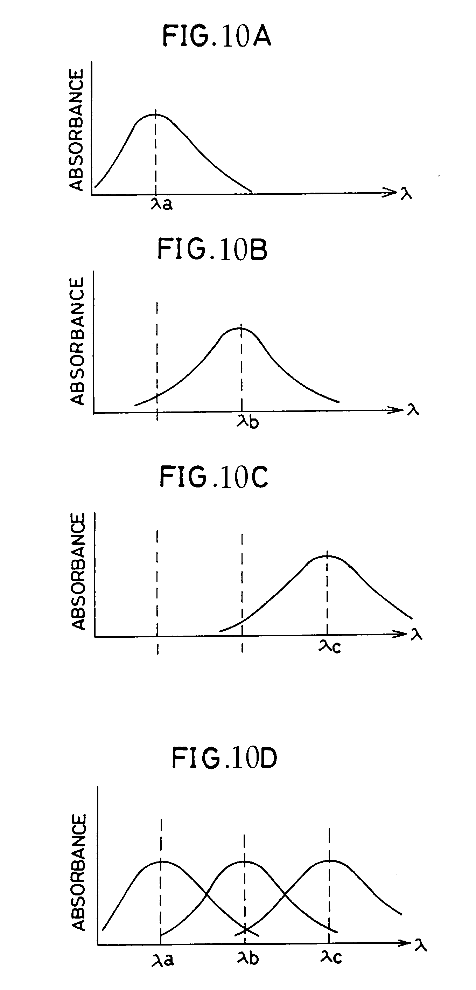

Although the recording medium has a recording layer containing two types of photochromic materials in the above description, the present invention is also applicable to a recording medium which contains three or more photochromic materials. For example, Figs. 10A to 10C show absorbance characteristics of three types of photochromic materials a, b and c. In this case, the photochromic materials a, b and c in a recording medium are dispersed in non-oriented states. Fig. 10A shows absorbance of the material a and Fig. 10B shows absorbance of the material b, while Fig. 10C shows absorbance of the material c. Fig. 10D shows absorbance of a medium which is prepared by stacking or mixing the materials a, b and c.

In this case, information may be recorded/reproduced with light beams having wavelengths λₐ and λ_{c} which are linearly polarized in the same direction and a light beam having a wavelength λ_{b} which is linearly polarized in a direction perpendicular to the aforementioned direction. It is possible to prevent crosstalk between the wavelengths λₐ and λ_{b} as well as between the wavelengths λ_{b} and λ_{c} by an effect similar to that in the aforementioned case of employing two types of photochromic materials. The crosstalk of the wavelengths of λₐ and λ_{c} is sufficiently small since absorption lines of the wavelengths λₐ and λ_{c} hardly overlap with each other. Thus, information can be recorded/reproduced substantially with no crosstalk.

A second embodiment according to the present invention is now described.

A recording layer for a recording medium is formed by mixing two types of photochromic materials A and B and applying the same onto a transparent substrate. In the recording layer, the photochromic materials A and B in a recording layer are dispersed in non-oriented states. Information is recorded by applying a linearly polarized light beam having a wavelength λ_{A}, which is absorbed by the material A, and another linearly polarized light beam having a wavelength λ_{B}, which is absorbed by the material B. These beams are so applied that directions of linear polarization thereof are perpendicular to each other on the same portions of the recording layer and the directions of linear polarization at the respective wavelengths are perpendicular every adjacent pair of tracks.

Fig. 11 shows directions of linear polarization of the light beams of the respective wavelengths λ_{A} and λ_{B} on tracks 50a, 50b and 50c. Referring to Fig. 11, solid arrows show the directions of polarization of the wavelength λ_{A}, and dotted lines show those of the wavelength λ_{B}. In order to reproduce the information, linear polarized light beams having the same wavelengths as those of the recording beams and corresponding to the directions of polarization of the wavelengths in recording.

According to the second embodiment, as hereinabove described, it is possible to prevent crosstalk based on light beams having different wavelengths. Further, the directions of linear polarization of the light beams having different absorption wavelengths are perpendicularly crossed every adjacent pair of tracks, whereby it is possible to reduce outputs related to adjacent tracks, as well as to prevent crosstalk from adjacent tracks.

Although each of the first and second embodiments has been described with reference to a recording medium containing a plurality of photochromic materials in a single recording layer, it is also possible to reduce crosstalk in a laminated type recording medium which is prepared by stacking a plurality of recording layers made of photochromic materials having different absorption wavelength regions. Further, a similar effect is also attained in a laminated type recording medium which is prepared by stacking a plurality of recording layers each formed of a plurality of photochromic materials having different absorption wavelength regions.

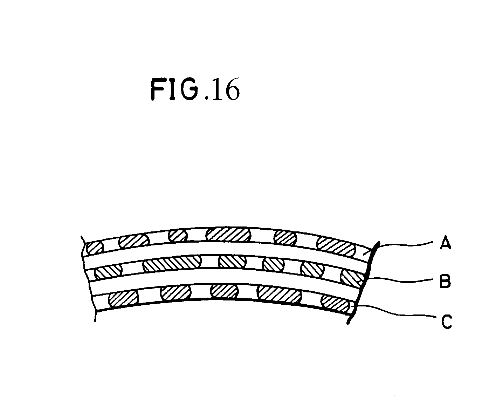

Fig. 12 shows an exemplary optical system of a recording/reproducing apparatus for carrying out the present invention. Referring to Fig. 12, a recording medium 51 comprises a recording layer 63 formed on a transparent substrate 61, and a reflective layer 62 of Au or the like formed on the recording layer 63. Three types of photochromic materials having the absorbance characteristics shown in Figs. 16A to 16C are dispersed in the recording layer 63 in non-oriented states. The optical system shown in Fig. 12 is formed by an optical system 53 corresponding to the wavelength λₐ, another optical system 54 corresponding to the wavelength λ_{b}, and still another optical system 55 corresponding to the wavelength λ_{c}. A first light source 71, a second light source 81 and a third light source 91 output linearly polarized light beams of the wavelengths λₐ, λ_{b} and λ_{c}, which are absorbed by the aforementioned three types of photochromic materials, respectively. The linearly polarized light beam of the wavelength λₐ outputted from the first light source 71 is converted to a parallel light beam through a lens 72 in the linearly polarized state, and thereafter passed through an isolator 73, which is formed by combination of a Faraday rotator, a polarizer, and the like, for preventing noise caused by return of reflected light to the first light source 71. The parallel light beam is transmitted through a half mirror 74 in a state of P-polarized light or S-polarized light, passed through dichroic mirrors 56 and 57, and converged on the recording layer 63 of the recording medium 61 through an objective lens 52, to record information. Similarly, the linearly polarized light beam of the wavelength λ_{b} outputted from the second light source 81 is converted to a parallel light beam through a lens 82 in the linearly polarized state, and then passed through an isolator 83 and a half mirror 84. The passed parallel light beam is reflected by the dichroic mirror 56, which has high reflectance for the beam of the wavelength λ_{b}, and then passed through the dichroic mirror 57. The passed collimated beam is converged on the recording layer 63 through the objective lens 52, to record information. Also in a similar manner, the linearly polarized light beam of the wavelength λ_{c} outputted from the third light source 91 is converted to a parallel light beam through a lens 92 in the linearly polarized state, and then passed through an isolator 93 and a half mirror 94. The passed parallel light beam is reflected by the dichroic mirror 57, which has high reflectance for the beam of the wavelength λ_{c}, and thereafter converged on the recording layer 63 through the objective lens 52, to record information. This optical system is so adjusted that the linearly polarized light beams of the wavelengths λₐ and λ_{c} are polarized in the same direction and the light beam of the wavelength λ_{b} is perpendicularly polarized with respect to the said light beams. For example, a half-wave plate or the like may be appropriately employed in order to attain such adjustment.

In order to reproduce the information, the outputs of the respective light sources are generally reduced and linearly polarized light beams of the respective wavelengths are applied to the recording layer in response to the directions of linear polarization of the recording beams of the respective wavelengths (generally the same directions), to detect the as-formed reflected light beams with sensors corresponding to the respective wavelengths. The linearly polarized light beam of the wavelength λₐ outputted from the first light source 71 is passed through the lens 72, the isolator 73, the half mirror 74 and the dichroic mirrors 56 and 57, and thereafter converged on the recording layer 63 through the objective lens 52. At this time, the direction of linear polarization of the light beam having the wavelength λₐ generally coincides with that of the recording beam of the wavelength λₐ. The linearly polarized light beam converged on the recording layer 63 is transmitted therethrough and reflected by the reflective layer 62, so that the reflected light beam is emitted from the recording medium 51. This reflected light beam is passed through the dichroic mirrors 57 and 56, reflected by the half mirror 74, and passed through a filter 75, which is mainly adapted to pass only the light beam of the wavelength λₐ. Thereafter the beam is converged on/detected by a sensor 76 through a lens 77, to reproduce information.

The linearly polarized light beam of the wavelength λ_{b} emitted from the second light source 81 similarly forms a reflected light beam through the recording medium 51. The reflected light beam is transmitted through the objective lens 52 and the dichroic mirror 57, and thereafter reflected by the dichroic mirror 56, which has high reflectance for the beam of the wavelength λ_{b}. Then this beam is reflected by the half mirror 84, and transmitted through a filter 85, which is mainly adapted to transmit only the beam of the wavelength λ_{b}. The transmitted reflected beam is converged on a sensor 86 through a lens 87, to reproduce the information.

The linearly polarized light beam of the wavelength λ_{c} emitted from the third light source 91 also forms a reflected beam through the recording medium 51. This reflected beam is reflected by the dichroic mirror 57, which has high reflectance for the beam of the wavelength λ_{c}, then reflected by the half mirror 94, and transmitted through a filter 95, which is mainly adapted to transmit only the beam of the wavelength λ_{c}. The transmitted reflected beam is converged on a sensor 96 through a lens 97, to reproduce the information.

The light sources are generally formed by gas lasers such as He-Ne lasers and Ar lasers, semiconductor lasers, or the like. If the gas lasers are employed, the light sources are provided with A-O modulators etc. for modulating outputted beams. The optical systems corresponding to the respective wavelengths may be arranged in the same optical head, while a plurality of optical heads may alternatively be provided in response to the respective wavelengths. Although a single optical system has been illustrated with respect to a reflection type recording medium in the above description, the recording medium may alternatively have another structure. Further, a transmission type recording medium can also be easily implemented through a similar principle. Although the aforementioned recording medium contains three types of photochromic materials, a recording layer containing at least two types of photochromic materials is also available in a similar optical system. While information is recorded/reproduced with linearly polarized light beams in each of the first to third embodiments, a similar effect can be attained with beams of other polarized states, such as elliptically polarized light beams. Further, the directions of linear polarization and elliptic polarization are not restricted to those of the aforementioned embodiments. For example, although the directions of linear polarization are at an angle of 90° (perpendicular) in the first embodiment, such an angle may differ from 90°, so far as the effect of preventing crosstalk is maintained.

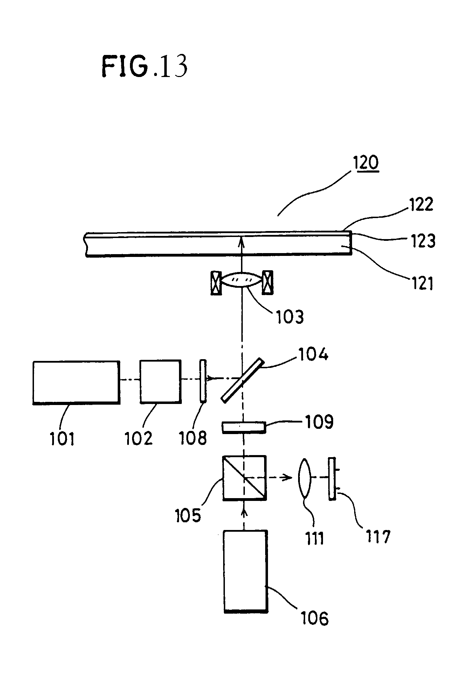

In Fig 13 a recording medium 120 is produced by adding a binder of PVB (polyvinyl butyral) to MEK (methyl ethyl ketone) for preparing a solvent, dissolving a photochromic material in this solvent, applying the solution onto a transparent substrate 121 of glass, quartz or resin by spin coating for forming a recording layer 123 of 1 µm in thickness, and forming a reflective layer 122 of Al or the like on the recording layer 123.

The recording layer 123 contains the photochromic material in a non-oriented state with no molecular orientation. When this medium 120 is irradiated with a linearly polarized light beam having a wavelength absorbed by the photochromic material, there is a high probability that those of molecules of the photochromic material having specific direction in response to the plane of polarization of the linearly polarized light beam cause photochemical reaction. Therefore, the aforementioned linearly polarized light beam is adapted to scan the recording layer 123, to form recorded portions having optically anisotropic directions which are responsive to the plane of polarization of the linearly polarized light beam.

A first light source 101, such as an Ar laser, outputs a linearly polarized recording incident light beam of λ = 360 nm, for example. This beam is converted to a pulse beam through a modulator 102, which is adapted to modulate the intensity of the recording incident beam in response to an information signal, and then introduced into a half-wave plate 108 for changing the direction of the plane of linear polarization (direction of polarization) of the recording incident beam. The half-wave plate 108 rotates the direction of its neutral axis, to change the direction of linear polarization of the recording incident beam. Thereafter the beam is introduced into an objective lens 103 through a dichroic mirror 104, and converged in the recording layer 123 of the recording medium 120 through the objective lens 103. While the first light source 101 is driven in such a manner, the recording medium 120 is relatively moved in a prescribed direction to modulate the recording incident beam through the modulator 102 in response to information, thereby forming recording tracks, which have optically anisotropic directions in response to the plane of linear polarization of the recording incident beam, on the recording layer 123. Among molecules which are contained in the recording layer 123, those coincident in transition moment with the direction of linear polarization of the recording incident beam mainly cause photochemical reaction, to form the recording tracks. The direction of the plane of polarization of the half-wave plate 108 is so rotated as to perpendicularly cross the direction of linear polarization of the recording incident beam, which is converged on the recording layer 123, every pair of adjacent tracks.

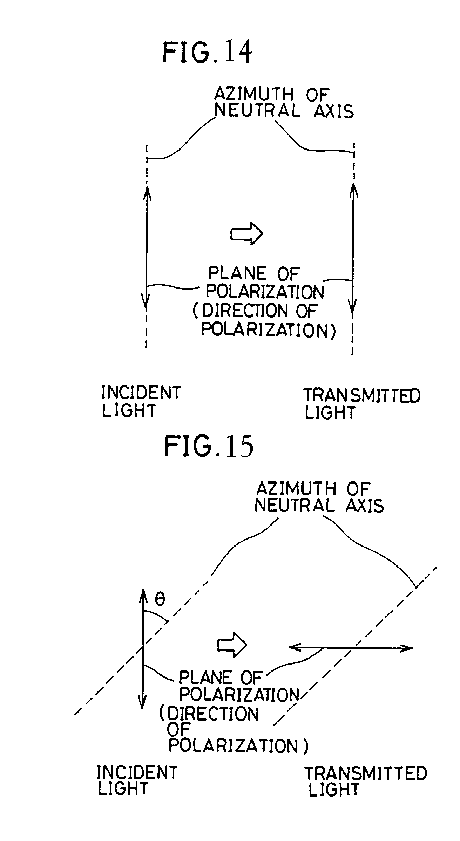

When a linearly polarized light beam is incident upon the half-wave plate 108, the plane of linear polarization of the beam remains unchanged if the same is at an angle θ of zero with respect to the azimuth of the neutral axis of the half-wave plate 108, while the said plane of polarization is rotated by 90° if the angle θ is 45°, as shown in Figs. 14 and 15. Namely, it is possible to perpendicularly cross the direction of linear polarization of the recording incident beam, which is converged on adjacent tracks, by alternately selecting the angle formed by the azimuth of the neutral axis of the half-wave plate 108 and the direction of the plane of polarization of the linearly polarized light beam between 0° and 45° every adjacent pair of tracks.

The as-formed recording tracks have optically anisotropic directions in response to the plane of polarization of the linearly polarized recording light beam, as shown by slant lines in Fig. 16. In other words, the optically anisotropic directions of adjacent recording tracks A, B and C are perpendicular to each other.

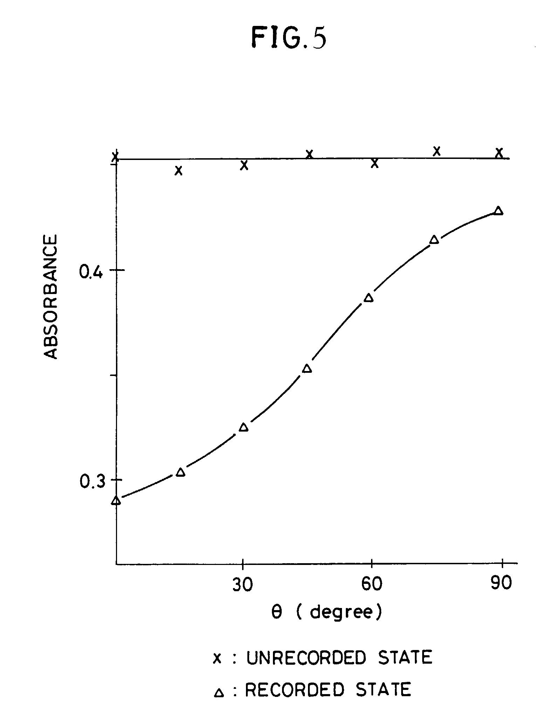

Information is reproduced through the fact that absorbance of a recording layer containing a non-oriented photochromic material and being irradiated with a linearly polarized recording light beam is different from that of a non-irradiated recording layer of the same type, and absorbance for a linearly polarized reproducing light beam forming an angle θ with respect to the plane of polarization of the linearly polarized recording light beam is varied with the angle θ with respect to the recording layer which is irradiated with the linearly polarized recording light beam, as shown in Fig. 5. Namely, a high output is attained with a linearly polarized light beam of a specific direction, i.e., an optically anisotropic direction (θ = 0° in Fig. 5), and the output is reduced when information is reproduced from the recording tracks with a linearly polarized light beam of a direction which is different by 90° from unrecorded tracks and the aforementioned specific direction. however, there is such a possibility that the relation shown in Fig. 11 is varied with the photochromic material and the wavelength of the beam for recording or reproduction. The optically anisotropic direction is generally defined as a direction causing large difference in absorbance between recording and reproducing beams, while it is preferable to set the direction of linear polarization of the reproducing beam so that θ = 0 when significant birefringence is caused in the recording layer.

With reference to Fig. 13, a method of reproducing information is now described in detail.

In order to reproduce information, the respective recording tracks are scanned with an incident light beam which is outputted from a second light source 106, such as an He-Ne laser, of λ = 633 nm, for example. The intensity of the reproducing beam emitted from the second light source 106 is set at a sufficiently small level so that the recording layer 123 causes no reaction with the beam, which is linearly polarized. The beam is passed through a beam splitter 105, and introduced into a half-wave plate 109. The half-wave plate 109 is so rotated that the optically anisotropic direction of every recording track coincides with the plane of polarization of the linearly polarized light beam. Thereafter the beam is applied to the recording layer 123 of the recording medium 120 through the dichroic mirror 104 and the objective lens 103. Then the beam is reflected by the reflective layer 122 while maintaining its polarized state. The reflected beam is received by a sensor 107 through the objective lens 103, the dichroic mirror 104, the half-wave plate 109, the beam splitter 105, and a lens 111. Thus, the sensor 107 outputs an electric signal which is modulated in response to information held in each recording track. In order to detect the optically anisotropic directions of the tracks, data such as track address numbers are preformatted in the recording medium 120, for example. Rotation of the half-wave plate 109 is controlled on the basis of the detected track address numbers.

In recording, the second light source 106 emits a feeble light beam of a constant output, which is applied to the recording layer 123 of the recording medium 120 through the beam splitter 105, the dichroic mirror 104 and the objective lens 108. Thereafter a reflected light beam resulting from such application of the feeble light beam is detected by the sensor 107 through the objective lens 103, the dichroic mirror 104, the half-wave plate 109, the beam splitter 105 and the lens 111, to carry out focus servo operation and tracking servo operation etc.

The light beams emitted from the first and second light sources 101 and 106 are adjusted by the dichroic mirror 104, so that the optical axes thereof coincide with each other.

Information was experimentally recorded and reproduced on the basis of this embodiment, whereby crosstalk of -28 dB was measured (C/N = 33 dB in this case). This means that the crosstalk is sufficiently suppressed as compared with that of -20 dB (C/N = 32 dB in this case) measured with a circularly polarized light beam causing no optical anisotropy, and it is possible to increase density by reducing track pitches. The aforementioned measurement was made through an optical disk unit. In this experiment, the recording medium 120 was formed by a glass substrate of 30 cm in diameter containing a spiropyran material. The recording medium 120 was provided with concentric circular grooves, and tracks were formed on the grooves at pitches of 1.6 µm. The recording medium 120 was rotated at a rate of 900 r.p.m. Signals of 1 MHz and 800 KHz in frequency were recorded in odd and every tracks respectively through an Ar laser of λ = 360 nm having laser power of 7 mW, and then reproduced through an He-Ne laser of λ = 633 nm having laser power of 0.5 mW, to measure signal leakages from tracks adjacent to the main recording tracks.

The present invention is also applicable to a disk unit having spiral tracks, for example. Such a structure can be easily implemented by providing the aforementioned unit with a circuit which is connected with a polarization plane rotating/driving unit (not shown) for detecting synchronizing signals from a rotating/driving system of the recording medium 120 and rotating neutral axes of the half-wave plates 108 and 109, thereby rotating planes of polarization of linearly polarized light beams and continuously rotating the plane of polarization of a linearly polarized light beam which is introduced into the recording medium 120 in synchronization with the rotation of the aforementioned rotating/driving system, so as to perpendicularly cross the plane of polarization of the linearly polarized light beam introduced into adjacent tracks. For example, the structure may be set to rotate the plane of polarization of the linearly polarized light beam by 90° every rotation of the recording medium 120.

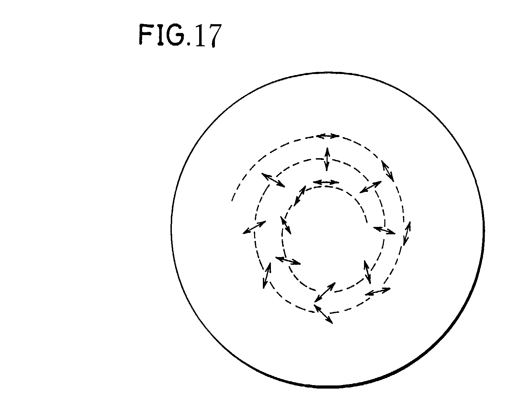

Fig. 17 is a conceptual diagram showing recording tracks which are formed on a recording medium in the aforementioned manner by a dotted line, and optically anisotropic directions thereof by arrows. It is assumed here that a half-wave plate reproduces information in an asynchronous state with respect to a disk in an initial stage of reproduction, and is synchronized with rotation of the disk when the reproducing output is maximized.

The recording medium may or may not be provided with grooves, guard bands, or the like.

In order to reproduce the as-recorded information by the aforementioned reproducing method, the optically anisotropic direction of a recording track storing the information to be reproduced is rendered coincident with the plane of linear polarization of the aforementioned reproducing beam, to attain a sufficient reproducing output. Even if the reproducing beam is partially applied to an adjacent recording track, substantially no output is generated in relation to the adjacent track since the optically anisotropic direction of the main recording track is perpendicular to the plane of polarization of the reproducing beam. Thus, it is possible to reduce crosstalk caused by the adjacent recording track in reproduction of the main recording track.

In addition to an optical disk unit, the present invention is also applicable to an optical tape, an optical card and the like, as a matter of course.

## Claims

1. A method for recording information in an optical recording medium, comprising the steps of:
preparing an optical recording medium (51) having a recording layer (63) containing a plurality of photochromic materials with different optical absorption wavelengths regions; and
applying light beams individually modulated onto said recording layer (63) of said optical recording medium (51), the light beams being of a number corresponding to the number of said plurality of photochromic materials and having wave lenghts corresponding to said respective photochromic materials in order to individually change optical properties of the irradiated area thereby performing multiplex recording,
**characterized** in that, said light beams are linearly polarized along at least two different directions for causing the change in said photochromic materials as an anisotropic change in correspondence to the respective polarization direction of the light beams.

2. A method for reproducing information recorded in an optical medium (51) having a recording layer (63) containing a plurality of photochromic materials with different optical absorption wavelengths regions in which information is recorded by a change of the optical properties of each material at irradiated areas,
the method comprising the steps of applying light beams on said recording layer (63) of said optical recording medium (51), the light beams being of a number corresponding to the numer of said plurality of materials and having wavelengths corresponding to the respective photochromic material,
and reproducing said information by detecting the light beams passed through the recording layer,
**characterized** in that,
changes of the optical properties of the recorded areas comprise different anisotropics and the reproducing linearly polarized light beams comprises at least two different directions of polarisation in correspondence to the direction of anisotropy.

3. A method for recording information recording according to claim 1, **characterized** in that, said recording layer (63) of said optical recording medium (51) has a plurality of recording tracks, and polarized light beams of different polarized states are applied to adjacent ones of said corresponding tracks to cause different optical anisotropic properties in said adjacent tracks, thereby recording said information.

4. A method for reproducing information according to claim 2, **characterized** in that, said recording layer (63) includes a plurality of recording tracks, and polarized light beams of different polarized states has been applied to adjacent ones of said recording tracks to cause different optical anisotropic properties in said adjacent recording tracks for recording information,
said reproducing polarized light beams are applied to said respective recording tracks in polarized states responsive to directions of said optical anisotropic properties of said recording tracks.

## Patentansprüche

1. Verfahren zum Aufzeichnen von Information auf einem optischen Aufzeichnungsmedium mit den Schritten:
Vorbereiten eines optischen Aufzeichnungsmediums (51) mit einer Aufzeichnungsschicht (63), die eine Mehrzahl fotochromatischer Materialien mit Adsorptionsbereichen mit verschiedenen optischen Wellenlängen enthält; und
Anlegen von individuell modulierten Lichtstrahlen an die Aufzeichnungsschicht (63) des optischen Aufzeichnungsmediums (51), wobei die Lichtstrahlen in ihrer Zahl der Zahl der Mehrzahl fotochromatischer Materialien entsprechen und Wellenlängen haben, die jenen der jeweiligen fotochromatischen Materialien entsprechen, um individuell die optischen Eigenschaften des bestrahlten Gebiets zu ändern, um so Multiplexaufzeichnungen durchzuführen,
dadurch **gekennzeichnet** daß,
die Lichtstrahlen wenigstens entlang zweier verschiedener Richtungen linear polarisiert sind, um Änderungen der fotochromatischen Materialien als Änderungen der Anisotropie in Übereinstimmung mit den jeweiligen Polarisationsrichtungen der Lichtstrahlen zu verursachen.

2. Verfahren zur Wiedergabe von auf einem optischen Mittel (51) aufgezeichneter Information, das eine Aufzeichnungsschicht (63) mit einer Mehrzahl fotochromatischer Materialien hat, welche Adsorptionsbereiche mit verschiedenen optischen Wellenlängen haben, in der Information mittels einer Änderung der optischen Eigenschaften eines jeden Materials in den bestrahlten Gebieten aufgezeichnet ist, wobei das Verfahren die Schritte umfaßt:
Anlegen von Lichtstrahlen an die Aufzeichnungsschicht (63) des optischen Aufzeichnungsmediums (51), wobei die Zahl der Lichtstrahlen der Zahl der Mehrzahl von Materialien entspricht und sie Wellenlängen entsprechend den jeweiligen fotochromatischen Materialien haben, und
Wiedergeben der Information durch die Detektion von Lichtstrahlen, die durch die Aufzeichnungsschicht hindurchgelangen,
dadurch **gekennzeichnet** daß,
die Änderungen der optischen Eigenschaften der Aufzeichnungsgebiete verschiedene Anisotropien aufweisen, und die wiedergebenden linear polarisierten Lichtstrahlen wenigstens zwei verschiedene Polarisationsrichtungen entsprechend der Richtung der Anisotropie enthalten.

3. Verfahren zum Aufzeichnen von Information entsprechend Anspruch 1,
dadurch **gekennzeichnet** daß die Aufzeichnungsschicht (60) des optischen Aufzeichnungsmediums (51) eine Mehrzahl von Aufzeichnungsspuren hat, und daß polarisierte Lichtstrahlen mit verschiedenen Polarisationszuständen auf zueinander benachbarte Spuren angelegt werden, um verschiedene optische Anisotropieeigenschaften in benachbarten Spuren zu erzeugen, wodurch die Information aufgezeichnet wird.

4. Verfahren zum Wiedergeben von Information entsprechend Anspruch 2,
dadurch **gekennzeichnet,** daß die Aufzeichnungsschicht (63) eine Mehrzahl von Aufzeichnungsspuren enthält, und daß polarisierte Lichtstrahlen mit verschiedenen Polarisationszuständen auf zueinander benachbarte Spuren angelegt wurden, um verschiedene optische Anisotropieeigenschaften in den benachbarten Aufzeichnungsspuren zur Aufzeichnung von Information zu erzeugen,
wobei wiedergebende polarisierte Lichtstrahlen mit Polarisationszuständen auf die jeweiligen Aufzeichnungsspuren angelegt werden, die von der Richtung der optischen Anisotropieeigenschaften der Aufzeichnungsspuren abhängen.

## Revendications

1. Méthode d'enregistrement de l'information dans un milieu d'enregistrement optique, comprenant les étapes consistant à :
préparer un milieu d'enregistrement optique (51) comprenant une couche d'enregistrement (63) contenant une pluralité de matériaux photochromiques avec des régions d'absorptions optiques des longueurs d'onde différentes ; et
appliquer des faisceaux lumineux modulés individuellement sur la dite couche d'enregistrement (63) du dit milieu d'enregistrement optique (51), les faisceaux lumineux étant d'un nombre correspondant au nombre de la dite pluralité de matériaux photochromiques et ayant des longueurs d'onde correspondant aux dits matériaux photochromiques respectifs afin de changer individuellement les propriétés optiques de la zone irradiée, réalisant de cette manière un enregistrement multiplex,
**caractérisée** en ce que, les dits faisceaux lumineux sont linéairement polarisés selon au moins deux directions différentes pour engendrer un changement dans les dits matériaux photochromiques tel qu'un changement d'anisotropie en correspondance avec les respectives directions de polarisation des faisceaux lumineux.

2. Méthode de reproduction de l'information enregistrée dans un milieu optique (51), comprenant une couche d'enregistrement (63) contenant une pluralité de matériaux photochromiques avec des régions d'absorptions optiques des longueurs d'onde différentes dans lesquelles l'information est enregistrée par un changement des propriétés optiques de chaque matériau dans les zones irradiées, la méthode comprenant les étapes consistant à appliquer des faisceaux lumineux sur la dite couche d'enregistrement (63) du dit milieu d'enregistrement optique (51), les faisceaux lumineux étant d'un nombre correspondant au nombre de la dite pluralité de matériaux et ayant des longueurs d'onde correspondant aux dits matériaux photochromiques respectifs,
et à reproduire la dite information en détectant les faisceaux lumineux passant à travers la couche d'enregistrement,
**caractérisée** en ce que,
les changements des propriétés optiques des zones enregistrées comprennent des différences d'anisotropie et en ce que les faisceaux lumineux de reproduction linéairement polarisés comprennent au moins deux directions de polarisation différentes qui correspondent à la direction d'anisotropie.

3. Méthode d'enregistrement de l'information, conforme à la revendication 1, **caractérisée** en ce que, la dite couche d'enregistrement (63) du dit milieu d'enregistrement optique (51) comporte une pluralité de pistes d'enregistrement, et que des faisceaux de lumière polarisés dans différents états de polarisation sont appliqués sur les pistes adjacentes aux dites pistes correspondantes pour générer des propriétés d'anisotropie optique différentes dans les dites pistes adjacentes, enregistrant de cette manière la dite information.

4. Méthode de reproduction de l'information, conforme à la revendication 2, **caractérisée** en ce que, la dite couche d'enregistrement (63) comporte une pluralité de pistes d'enregistrement, et en ce que des faisceaux de lumière polarisés dans différents états de polarisation ont été appliqués sur les pistes adjacentes aux dites pistes d'enregistrement pour générer des propriétés d'anisotropie optique différentes dans les dites pistes d'enregistrement adjacentes pour enregistrer l'information, les dits faisceaux lumineux de reproduction polarisés sont appliqués sur les dites pistes d'enregistrement respectives dans des états polarisés sensibles aux directions des dites propriétés d'anisotropie optique des dites pistes d'enregistrement.
